# EUROPEAN PATENT APPLICATION

(11) **EP 4 838 097 A2**
(43) Date of publication of application: **11.11.2026**
(21) Application number: 26176910.3
(22) Date of filing: 06.05.2026
(51) Int. Cl.: F04D 25/08, F04D 25/06, F04D 29/60

(54) **PORTABLE DEVICE INCLUDING A CLAMP ASSEMBLY**

(30) Priority: 06.05.2025 US 202519200026
(71) Applicant: Techtronic Cordless GP, Anderson, SC 29621 (US)
(72) Inventor: COLLINS, Joshua P., Anderson, 29621 (US); LYONS, John R., Anderson, 29621 (US); OHI, Taku, Anderson, 29621 (US); RAMESH, Divyeshwar, Anderson, 29621 (US); JERABEK, Jesse J., Anderson, 29621 (US)
(74) Representative: Parker, Andrew James

(57) **Abstract**

A portable device includes a base configured to support the portable device on a support surface, a housing supported by the base, an output element supported by the housing, and a clamp assembly coupled to the base. The clamp assembly includes a clamp movable relative to the base and configured to clamp an object against the base, and a damping mechanism coupled to the clamp to control a movement speed of the clamp relative to the base.

## Description

### FIELD

The application relates to portable devices, such as fan assemblies, and more specifically, to adjustable fan assemblies.

### BACKGROUND

Portable cooling devices, such as fan assemblies, are commonly used to provide airflow in various environments, including worksites, outdoor spaces, etc. Many such spaces require the fan assembly to be easily transportable while delivering sufficient airflow to effectively cool the intended space. However, many existing portable fans lack versatility in positioning and adaptability, which can limit their effectiveness in various applications.

### SUMMARY

In one aspect, the disclosure provides a portable device including a base configured to support the portable device on a support surface; a housing supported by the base; an output element supported by the housing; and a clamp assembly coupled to the base and including a clamp movable relative to the base and configured to clamp an object against the base, and a damping mechanism coupled to the clamp to control a movement speed of the clamp relative to the base.

In another aspect, the disclosure provides a portable device including a base configured to support the portable device on a support surface; a housing supported by the base; an output element supported by the housing; a clamp coupled to the base, the clamp movable relative to the base between a first position, where the clamp is stored at least partially within the base, and a second position, where the clamp is extended away from the base; and an actuator coupled to the clamp, the actuator operable to releasably hold the clamp in the second position.

In yet another aspect, the disclosure provides a portable device including a base configured to support the portable device on a support surface; a housing supported by the base; an output element supported by the housing; and a yoke assembly positioned between the housing and the base and defining a longitudinal axis, the yoke assembly including a first portion coupled to the housing and a second portion coupled to the base, the first portion being rotatable relative to the second portion about the longitudinal axis and defining a first axis about which the housing is pivotable relative to the yoke assembly, the second portion defining a second axis about which the yoke assembly is pivotable relative to the base.

Other aspects of the disclosure will become apparent by consideration of the detailed description and accompanying drawings.

### BRIEF DESCRIPTION OF THE DRAWINGS

FIG. 1 is a perspective view of a fan assembly according to one aspect of the disclosure.
FIG. 2 is another perspective view of the fan assembly of FIG. 1.
FIG. 3 is a bottom view of the fan assembly of FIG. 1.
FIG. 4 is an exploded view of the fan assembly of FIG. 1.
FIG. 5 is a cross-sectional view of the fan assembly taken along section line 5-5 of FIG. 1.
FIG. 6 is a perspective view of a yoke assembly of the fan assembly of FIG. 1.
FIG. 7A is a partial cross-sectional view of the fan assembly of FIG. 1, illustrating a clamp assembly in a stored position.
FIG. 7B is another partial cross-sectional view of the fan assembly of FIG. 1, illustrating the clamp assembly in an extended position.
FIG. 8A is a side view of the fan assembly of FIG. 1, showing a fan housing and a yoke assembly in a first position.
FIG. 8B is another side view of the fan assembly of FIG. 1, showing the fan housing and the yoke assembly in a second position.
FIG. 8C is another side view of the fan assembly of FIG. 1, showing the fan housing and the yoke assembly in a third position.
FIG. 9 is another perspective view of the fan assembly of FIG. 1, showing the clamp assembly clamped around an object.

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting. Use of "including" and "comprising" and variations thereof as used herein is meant to encompass the items listed thereafter and equivalents thereof as well as additional items. Use of "consisting of" and variations thereof as used herein is meant to encompass only the items listed thereafter and equivalents thereof. Unless specified or limited otherwise, the terms "mounted," "connected," "supported," and "coupled" and variations thereof are used broadly and encompass both direct and indirect mountings, connections, supports, and couplings.

### DETAILED DESCRIPTION

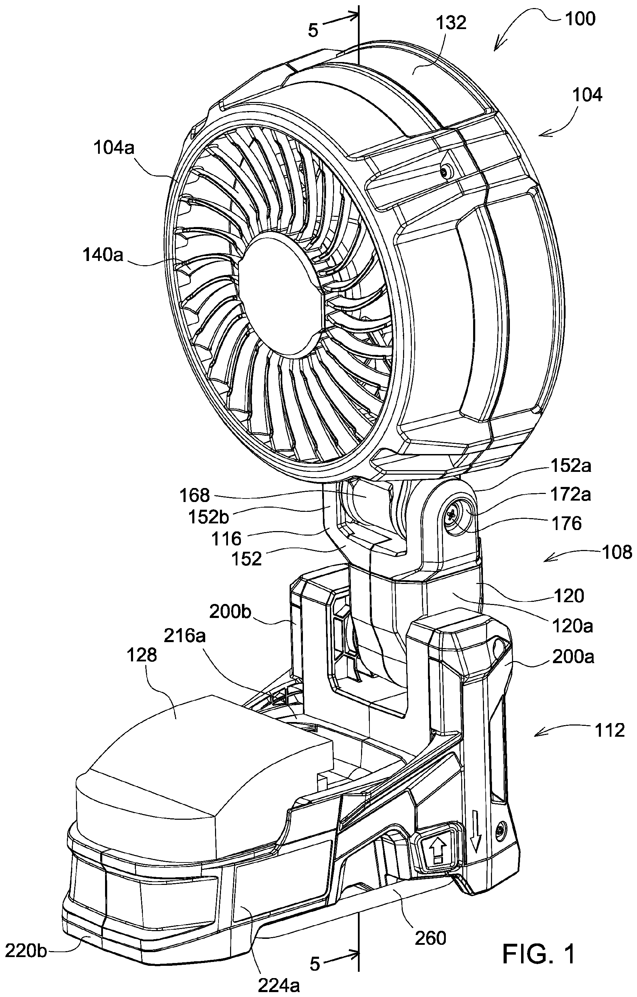

FIGS. 1-9 illustrate a portable device. In the illustrated embodiment, the portable device is a cooling apparatus, such as a fan assembly 100, operable to cool a workspace. In other embodiments, the portable device may be a different type of device. For example, the portable device may be a space heater, a work light, a portable speaker, a power tool, and the like. In some embodiments, the portable device may be a combination of devices operable to perform a combination of features (e.g., cooling and lighting, lighting and sound, etc.).

The illustrated fan assembly 100 includes a housing 104, a yoke assembly 108, and a base 112. The yoke assembly 108 is configured to support the housing 104 in multiple configurations (e.g., orientations, positions, angles, etc.). The yoke assembly 108 includes a first portion 116 and a second portion 120. The first portion 116 may also be referred to as a rotational portion. The second portion 120 may also be referred to as a non-rotational portion. The first portion 116 is movably (e.g., rotatably) coupled to the second portion 120 in a desired configuration. The base 112 includes a battery receptacle 124 configured to receive a battery pack 128. The housing 104 may include a shroud 132 and a motor 136.

As shown in FIGS. 1-2 and 4-5, the housing 104 is generally cylindrical and includes a front face 104a and a rear face 104b opposite the front face 104a. The shroud 132, positioned between the front and rear faces 104a, 104b, serves as a protective covering for internal components of the housing 104. The housing 104 also includes a first grille 140a positioned on the front face 104a and a second grille 140b positioned on the rear face 104b. The grilles 140a, 140b are generally planar and include a series of radial openings, or vents, that allow airflow to pass through the housing 104 while providing protection from the internal components of the housing 104.

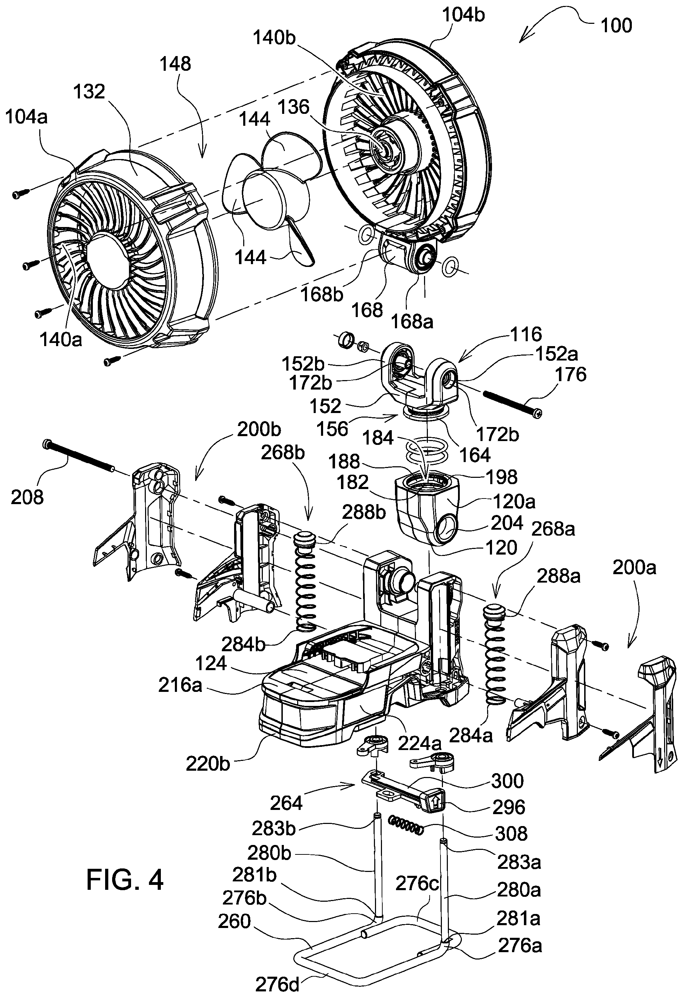

With reference to FIG. 4, the housing 104 further supports the motor 136 and one or more blades 144 rotatable by the motor 136 to generate an airflow through an airflow chamber 148 formed at least partially by the shroud 132. The blades 144 may also be considered an output element of the fan assembly 100. In embodiments where the portable device is a different type of device, the output element may include a different type of output element. For example, the output element may include one or more heaters (e.g., of a space heater), one or more LEDs (e.g., of a work light), one or more speakers (e.g., of a portable speaker), a chuck or spindle (e.g., of a power tool), and the like. The motor 136 may receive power from the battery pack 128 to power rotation of the blades 144. In other embodiments, the motor 136 may receive power from another AC or DC source such as a wall outlet, a generator, or the like. In the illustrated embodiments, the housing 104 includes three blades 144. However, the housing 104 may include any suitable number of blades 144, such as two, four, or more, depending on design preferences, efficiency goals, or airflow performance requirements. Additionally, in some embodiments, the housing 104 may include a handle graspable by a user for transporting the fan assembly 100.

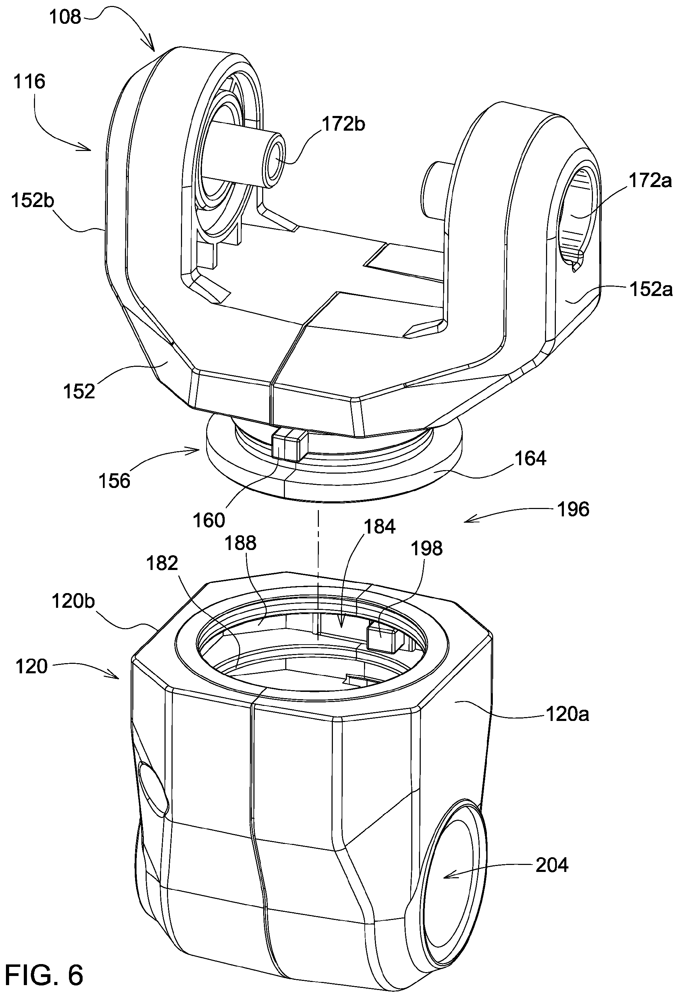

As shown in FIGS. 1-2 and 4-6, the yoke assembly 108 is coupled to the housing 104 and the base 112. More specifically, the first portion 116 is pivotably coupled to the housing 104 and the second portion 120 is pivotably coupled to the base 112. The first portion 116 includes a generally U-shaped arm 152 and a cylindrical post 156 extending from a midpoint of the arm 152. The post 156 includes a tab 160 (FIG. 6) extending outwardly, and a radial lip 164 positioned at a distal end of the post 156. In the illustrated embodiments, the arm 152 and the post 156 are integrally formed, although in other constructions, they may be removably coupled to each other.

The arm 152 is coupled to a cylindrical mount 168 formed on the housing 104. A first distal end 152a of the arm 152 is coupled to a first side 168a of the mount 168, and a second distal end 152b of the arm 152 is coupled to a second side 168b of the mount 168. The first distal end 152a includes a first aperture 172a, and the second distal end 152b includes a second aperture 172b. The apertures 172a, 172b are sized to receive a fastener 176 (e.g., a bolt) that extends through both ends 152a, 152b of the arm 152 and into the mount 168, thereby coupling the yoke assembly 108 to the housing 104. This coupling allows the housing 104 to pivot relative to the yoke assembly 108 about a first axis 180 extending through the first and second apertures 172a, 172b. In the illustrated embodiment, the housing 104 may pivot approximately 180 degrees about the first axis 180, although greater or lesser angles may be implemented.

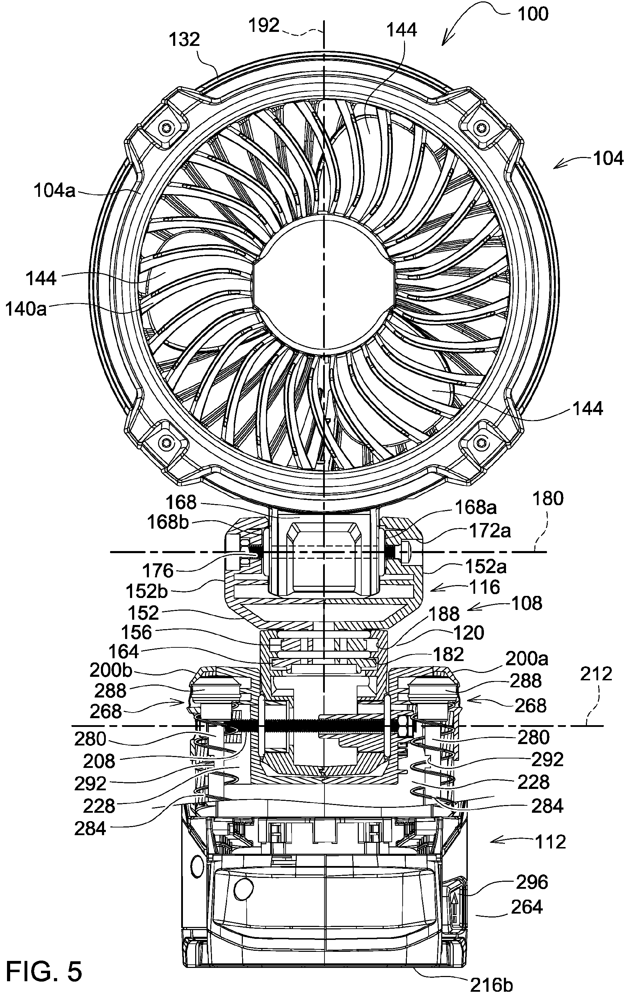

With reference to FIGS. 4 and 6, the second portion 120 includes a central bore 184 configured to receive the post 156 of the first portion 116. The bore 184 includes a channel 188 configured to receive the tab 160, and a shoulder 182 for engaging the radial lip 164. The post 156 is rotatably received within the bore 184, allowing the first portion 116 to rotate relative to the second portion 120 about a longitudinal axis 192 of the yoke assembly 108. As shown in FIG. 5, the longitudinal axis 192 is oriented substantially perpendicular to the first axis 180.

As shown in FIG. 6, a floating stop mechanism 196 is formed between the post 156 and the bore 184 to maintain axial alignment and guide rotation. Specifically, the tab 160 is received within the channel 188, which defines a rotational path while allowing the tab 160 to rotate freely. A block 198 is positioned within the channel 188 and engages the tab 160 as the post 156 rotates. The block 198 may move (e.g., slide or rotate) within the channel 188 in response to engagement by the tab 160, thereby maintaining controlled contact between the post 156 and the bore 184 during rotation. In the illustrated embodiment, the channel 188 is continuous and does not include internal stop surfaces, thereby permitting at least 360 degrees of rotation. The radial lip 164 engages the shoulder 182 to prevent axial disengagement of the post 156 from the bore 184, securing the first and second portions 116, 120 together.

The second portion 120 is coupled to vertical supports 200a, 200b of the base 112. A first face 120a of the second portion 120 is coupled to a first support 200a, and a second face 120b of the second portion 120 is coupled to a second support 200b. An aperture 204 extends through the second portion 120 and the supports 200a, 200b and is sized to receive a fastener 208 (e.g., a bolt) (FIGS. 4-5) that secures the yoke assembly 108 to the base 112. This arrangement allows the yoke assembly 108 to pivot relative to the base 112 about a second axis 212 extending through the aperture 204. Specifically, yoke assembly 108 may pivot approximately 180 degrees about the second axis 212, although greater or lesser angles may be implemented. As shown in FIG. 5, the second axis 212 is oriented substantially parallel to the first axis 180 and substantially perpendicular to the longitudinal axis 192.

A user may manually aim or tilt the fan assembly 100 to a desired position. That is, the user may manually aim the housing 104, the first portion 116 of the yoke assembly 108, and/or the second portion 120 of the yoke assembly 108 as needed. However, in alternative embodiments, the motor 136 may drive rotation of the housing 104 and/or yoke assembly 108.

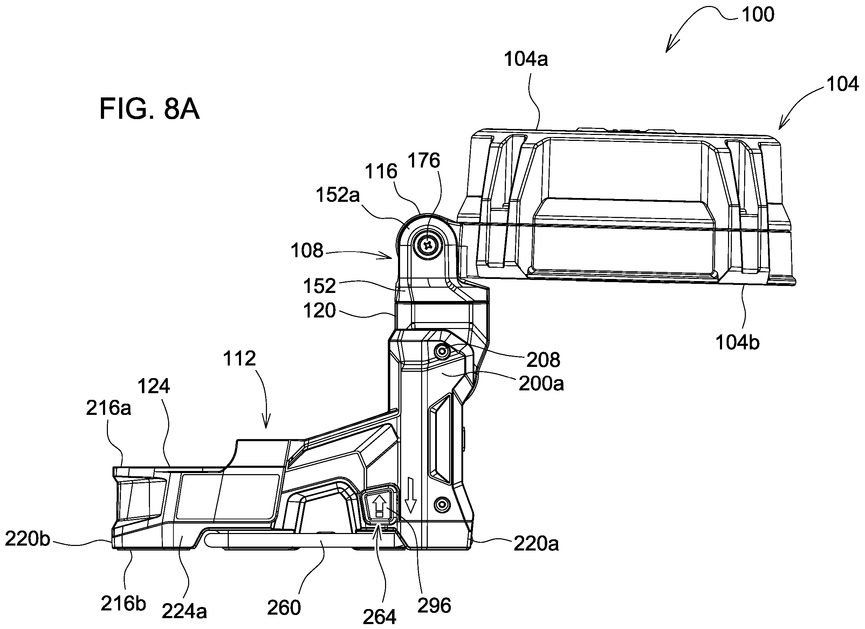

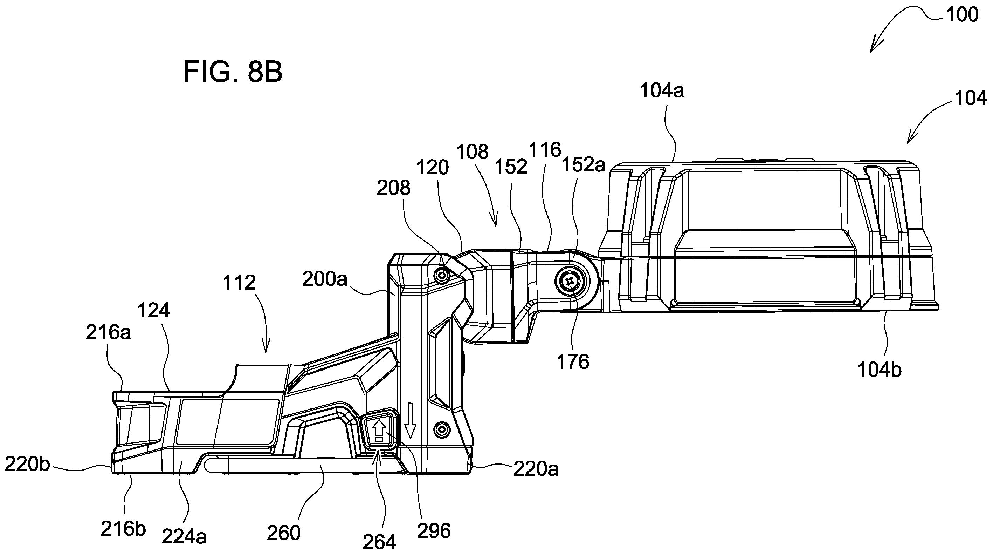

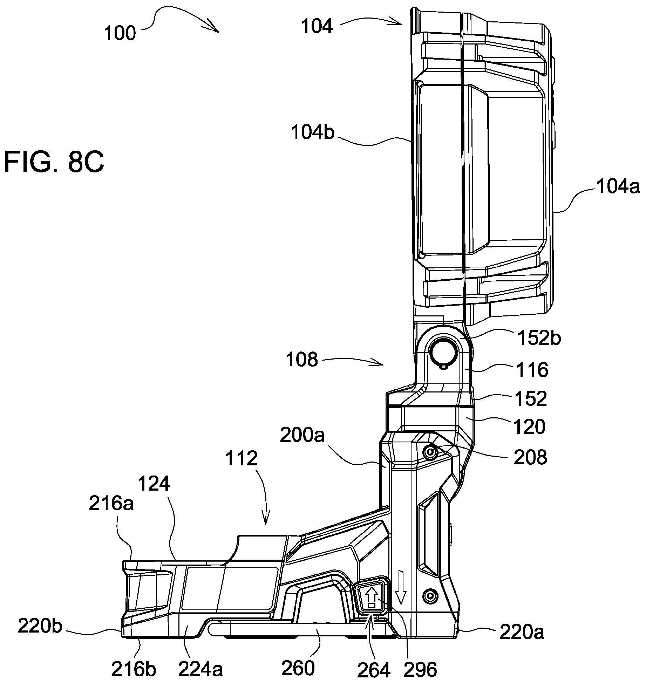

As shown in FIGS. 8A-8C, the fan assembly 100 is positionable in various orientations. The housing 104 is pivotable relative to the first portion 116 of the yoke assembly 108 through an angular range of approximately 180 degrees, extending about 90 degrees in either direction (e.g., FIG. 8A) from an upright position (FIGS. 1-2). The yoke assembly 108 is likewise pivotable relative to the base 112 through an angular range of approximately 180 degrees, extending about 90 degrees in either direction (e.g., FIG. 8B) from an upright position (FIGS. 1-2). Additionally, the first portion 116 of the yoke assembly 108 is rotatable relative to the second portion 120 about the longitudinal axis 192, allowing for continuous 360-degree rotation. For example, as shown in FIG. 8C, the first portion 116 is rotated approximately 180 degrees relative to the second position 120. Although FIGS. 8A-8C depict several example positions, the fan assembly 100 may be adjusted to a wide variety of orientations to accommodate different use scenarios.

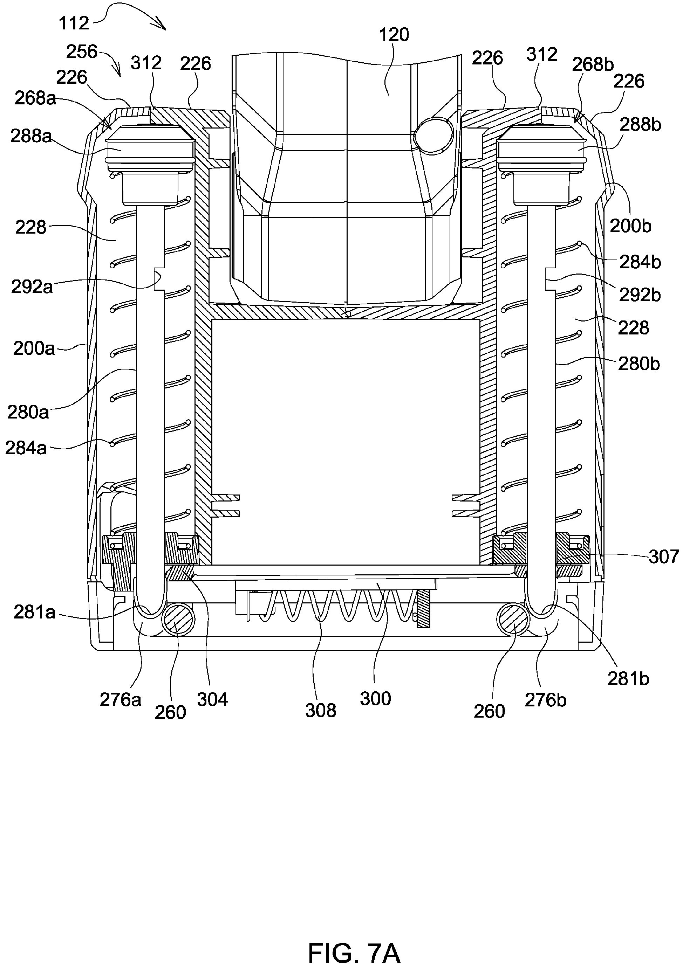

Referring to FIGS. 1-4 and 9, the base 112 is generally trapezoidal and includes a first, upper surface 216a, and a second, bottom surface 216b opposite the upper surface 216a. The base 112 further includes a first end 220a, a second end 220b opposite the first end 220a, a first side surface 224a, and a second side surface 224b opposite the first side surface 224a. The vertically extending supports 200a, 200b are positioned on the first end 220a of the base 112. Specifically, the first support 200a is positioned adjacent the first side surface 224a, and the second support 200b is positioned adjacent the second side surface 224b. The supports 200a, 200b extend upward from the upper surface 216a and are spaced apart to receive the second portion 120 of the yoke assembly 108, as discussed above. As shown in FIGS. 7A-7B, each support 200a, 200b is formed of two clamshell components 226 that, when assembled, defined an enclosed chamber 228.

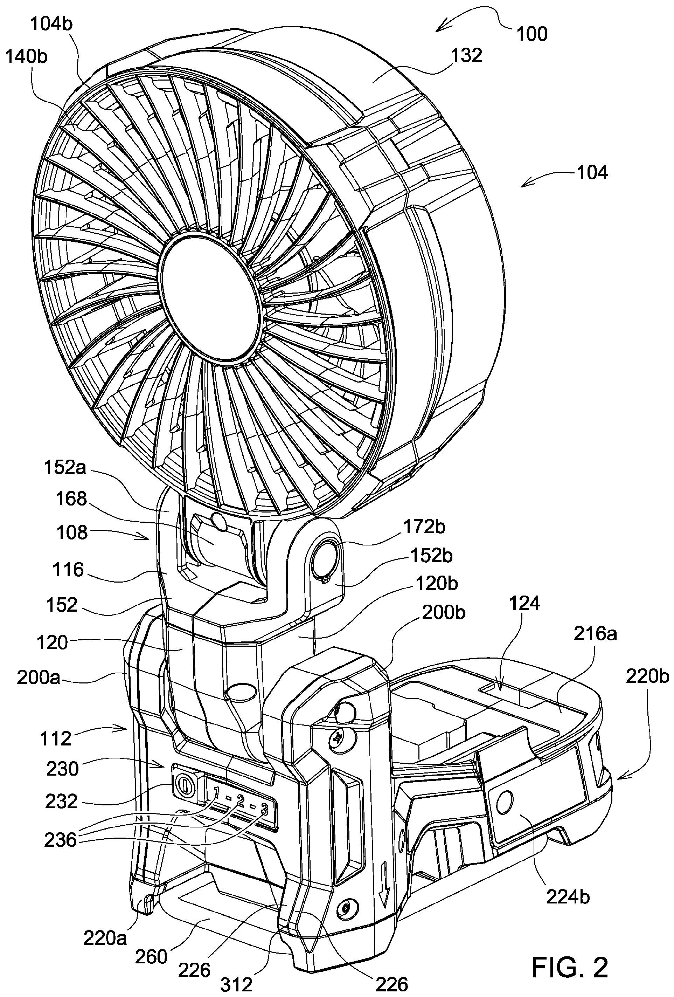

With reference to FIG. 2, the base 112 supports a control panel 230. The illustrated control panel 230 includes an actuator 232 for operating the fan assembly 100 and a series of LED indicators 236. The actuator 232 could be a button, switch, or any suitable control mechanism that is configured to power the fan assembly 100 on and off, and to cycle through a sequence of operating modes. In the illustrated embodiment, the control panel 230 includes three LED indicators 236, each corresponding to a different fan speed setting. In other embodiments, the control panel 230 may include fewer or additional indicators 236. A first depression of the actuator 232 activates the fan assembly 100 at a first speed setting (e.g., a low speed), a second depression advances the fan assembly 100 to a second setting (e.g., an intermediate speed), a third depression advances the fan assembly 100 a third setting (e.g., a high speed), and a fourth depression turns the fan assembly 100 off. In another embodiment, the actuator may shut off the fan assembly 100 if the time between a first press and a second press of the actuator 232 exceeds a preset value (e.g., 15 seconds). For example, the actuator 232 could be pressed once, turning the fan assembly 100 on in the low speed setting, then if the fan assembly 100 was left on for some preset time and then the actuator 232 was pressed again, the fan assembly 100 would turn off. The LED indicator 236 associated with the currently active setting illuminates, providing visual feedback to the user regarding the current operating state. In alternative embodiments, different control schemes may be employed. For example, an extended press of the actuator 232 could toggle the fan assembly 100 on and off, while shorter presses cycle through the speed settings.

Referring to FIGS. 1-2, the battery receptacle 124 is positioned on the first surface of the base and configured to receive the battery pack 128 (FIG. 1), which supplies power to the fan assembly 100. The battery pack 128 may be selectively and removably inserted into the battery receptacle 124 to connect the battery pack 128 to the fan assembly 100. The battery pack 128 may be a power tool battery pack generally used to power a power tool, such as an electric drill, an electric saw, and the like. For example, the battery pack 128 may be an 18V Li-ion battery pack. In other embodiments, the battery pack 128 may have other voltages and/or chemistries. In some embodiments, the battery receptacle 124 may additionally include an AC inlet to power the fan assembly 100 through an AC power source. In such embodiments, the AC inlet may receive power from an AC power source to also charge the battery pack 128.

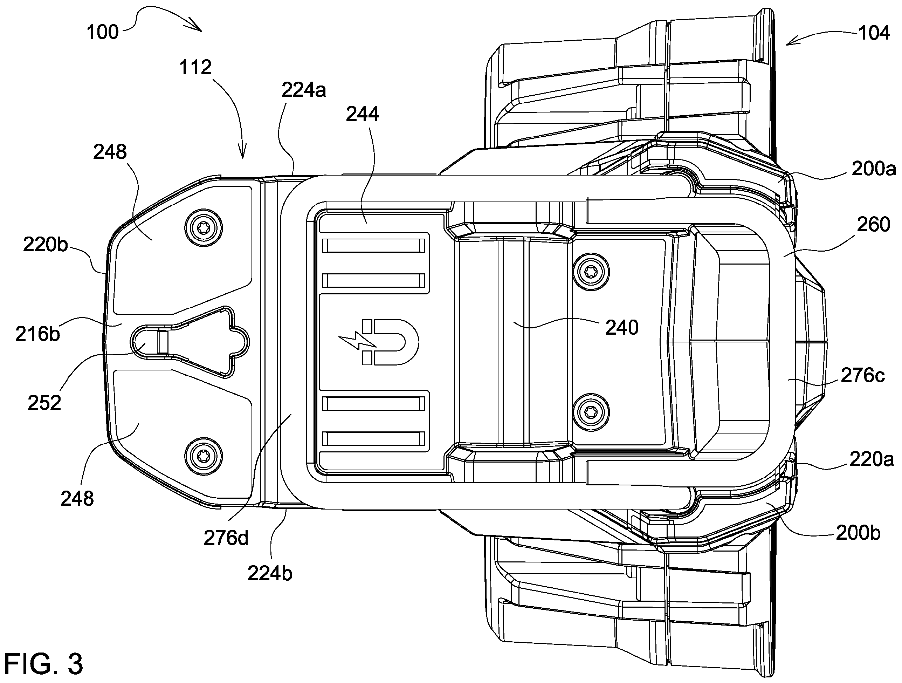

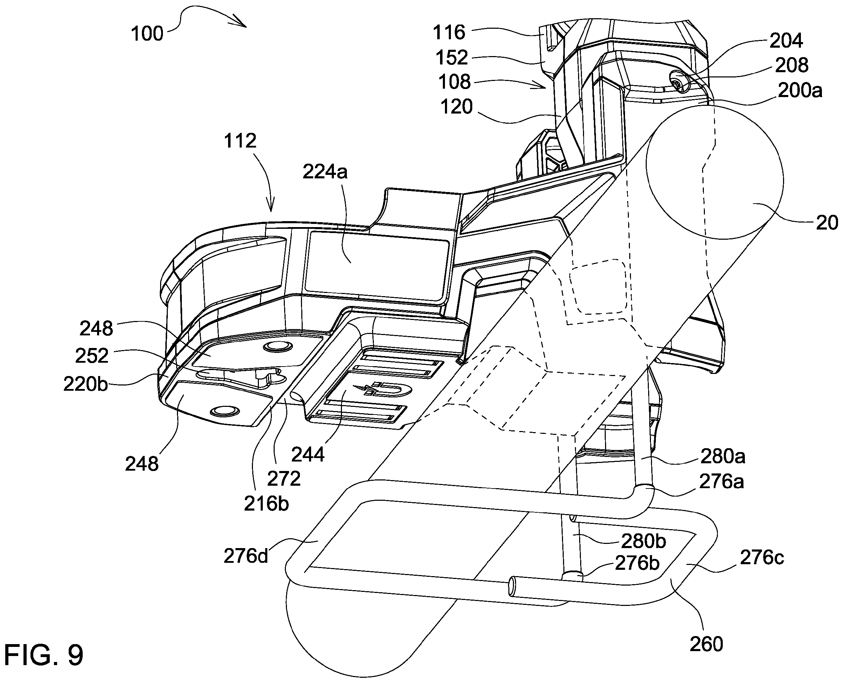

With reference to FIGS. 3 and 9, the second surface 216b of the base 112 is generally planar and rectangular in shape. A concave pocket 240, or recess, is formed in the bottom surface 216b and is shaped and sized to receive a cylindrical object 20 (FIG. 9), such as a pipe or rod. The pocket 240 facilitates stable engagement with a complementary surface. The second surface 216b also includes a magnetic plate 244, or magnet, configured to secure an object to the base 112. Specifically, the magnetic plate 244 covers a majority of the second surface 216b and extends into the pocket 240, covering the pocket 240. That is, the magnetic plate 244 is substantially planar and includes an arcuate portion shaped and sized to fit within the concave pocket 240. The magnetic plate 244 enhances the ability of the base 112 to magnetically attach to or retain compatible objects during use. Pads 248 are positioned adjacent the second end 220b of the base 112 to reduce marring on a work surface. Other overmolding on the base 112 may also help reduce marring on the work surface. In addition, the material of the pads 248 and the material of the overmolding on the base 112 provides improved friction between the base 112 and the work surface.

With reference to FIG. 3, the second surface 216b of the base 112 further includes an aperture 252 positioned between the pads 248. The aperture 252 is keyhole-shaped to accommodate fasteners (e.g., screws, nails, etc.), enabling secure mounting of the fan assembly 100 on a vertical or horizontal surface. In the illustrated embodiments, the base 112 includes one keyhole-shaped aperture 252. However, in alternative configurations, the base 112 may include additional apertures.

With reference to FIGS. 3-4, 7A-7B, and 9, the base 112 further includes a clamp assembly 256. The clamp assembly 256 is configured to selectively hold and release an object against the fan assembly 100. More specifically, the second surface 216b of the base 112 defines a clamping face against which the clamp assembly 256 firmly holds the object. The clamp assembly 256 includes a clamp 260, an actuator 264, and first and second damping mechanisms 268a, 268b. The clamp 260 is cylindrical and bent into a generally rectangular shape with rounded corners, such that the clamp 260 includes four straight segments, or arms 276a-276d defining a closed loop. In the illustrated embodiment, the arms 276a, 276b, 276d are formed of one bent piece of metal, and the arm 276c is made of another bent piece of metal. The arm 276c is welded or otherwise secured to the arms 276a, 276 to form the clamp 260. In other embodiments, the clamp 260 may have other configurations.

The clamp 260 is received within a corresponding recess 272 (FIG. 9) formed in the second surface 216b of the base 112. Distal ends of the clamp 260 form a pair of arms 276a, 276b. A first arm 276a extends adjacent the first side surface 224a of the base 112, and a second arm 276b extends adjacent the second side surface 224b of the base 112 and parallel to the first arm 276a. The clamp 260 further includes a third arm 276c and a fourth arm 276d extending between the first and second arms 276a, 276b, such that the third arm 276c extends adjacent the first end 220a of the base 112, and a fourth arm 276d extends adjacent the second end 220b of the base 112 and parallel to the third arm 276c. The first and second arms 276a, 276b are oriented substantially perpendicular to the third and fourth arms 276c, 276d.

With reference to FIG. 3, the pocket 240 is positioned between the arms 276a-276d. More specifically, the first and second arms 276a, 276b extend beyond the periphery of the pocket 240. When the clamp 260 is received within the recess 272, the arms 276a-276d are recessed to lie flush with the second surface 216b. With continued reference to FIG. 3, the magnetic plate 244 is positioned entirely within the periphery of the arms 276a-276d. However, in some embodiments, the magnetic plate 244 may extend beyond the periphery of the arms 276a-276d. For example, the magnetic plate 244 may span across the entire second surface 216b of the base 112.

The first arm 276a is coupled to the first damping mechanism 268a and the second arm 276b is coupled to the second damping mechanism 268b. Each damping mechanism 268a, 268b includes a shaft 280a, 280b, a first biasing member 284a, 284b, and an elastomeric plunger 288a, 288b. The shaft 280a, 280b is generally cylindrical and includes a first end 281a, 281b couped to one of the arms 276a, 276b of the clamp 260, and a second end 283a, 283b coupled to the plunger 288a, 288b. The first biasing member 284a, 284b (e.g., a coil spring) surrounds the shaft 280a, 280b and is configured to bias the clamp 260. A notch 292a, 292b is formed in the shaft 280a, 280b adjacent the second end 283a, 283b to selectively engage the actuator 264, as discussed in more detail below. The plunger 288a, 288b is slidably received within the chamber 228 defined by the clamshell components 226 of the supports 200a, 200b of the base 112, which are secured together around the shaft 280a, 280b. The chamber 228 is not fully sealed but is sufficiently enclosed to trap a column of air behind the plunger 288a, 288b as the shaft 280a, 280b retracts.

The actuator 264 is positioned within the base 112 and is moveable between a locked position and a retracted position in response to user input. The actuator 264 includes an operating member 296 extending through the first side surface 224a of the base 112, an elongate body 300, an arm 304, and an aperture 306. The arm 304 is curved to at least partially wrap around a portion of the shaft 280a and is configured to interface with the notch 292a, and the shaft 280b extends through the aperture 306. A sidewall 307 that defines the aperture 306 is configured to interface with the notch 292b. A second biasing member 308 (e.g., a coil spring) is positioned along the elongate body 300 and biases the actuator 264 toward the first side surface 224a of the base 112.

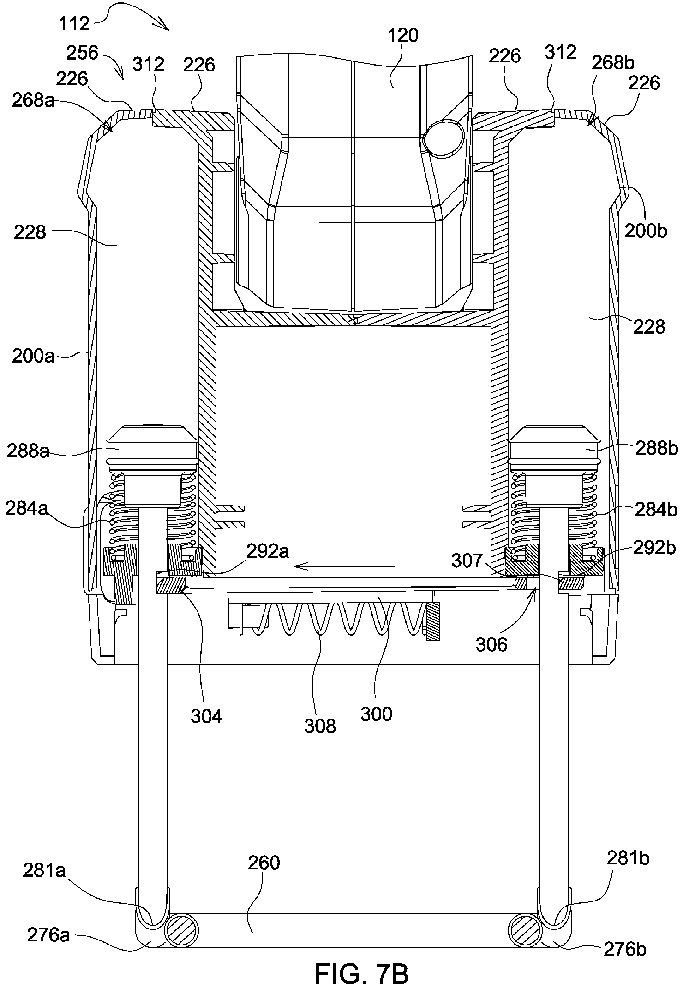

With reference to FIGS. 7A-7B, the clamp assembly 256 is moveable between a stored position (FIG. 7A), a clamped position (FIG. 9), and a fully extended position (FIG. 7B). The stored position may also be referred to as a first position. The fully extended position may also be referred to as a second position. The clamped position may also be referred to as a third position or an intermediate position. In the stored position, the clamp 260 is received and retained within the recess 272 formed in the second surface 216b of the base 122, such that the clamp 260 lies flush, or substantially flush, with the outer surface of the base 112. In some embodiments, the clamp 260 may be recessed relative to the outer surface of the base 112. The stored position facilitates compact storage and minimizes interference when the clamp 260 is not in use. In the clamped position, the clamp 260 is at least partially retracted out of the base 112 and engages an object 20 positioned between the clamp 260 and the second surface 216 of the base 112. The clamp 260 is biased toward the base 112 via the first biasing members 284a, 284b, which generate a clamping force that presses the object 20 securely against the second surface 216b. In the fully extended position, the clamp 260 is pulled outward from the base 112 to its maximum extension, for example, to accommodate insertion of a large object to or reposition the clamp 260 prior to release. In this position, the clamp 260 is held away from the base 112 and the object 20 via engagement of the notches 292a, 292b on the shafts 280a, 280b with the actuator 264.

When the user manually pulls the clamp 260 from the stored position (FIG. 7A) toward the fully extended position (FIG. 7B), the shafts 280a, 280b translate downward within their respective chambers 228 against the bias of the first biasing members 284a, 284b. As the shafts 280a, 280b translate, the notches 292a, 292b align with the actuator 264. Specifically, the notch 292a aligns with the arm 304 and the notch 292b aligns with the sidewall 307 of the aperture 306. The second biasing member 308 biases the arm 304 and the sidewall 307 into their respective notches 292a. 292b, locking the shafts 280a, 280b, and thereby the clamp 260, in the fully extended position.

To return the clamp 260 to the stored position or clamped position, the user depresses the operating member 296 of the actuator 264, causing the arm 304 and sidewall 307 to retract from the notches 292a, 292b, respectively, and releasing the shafts 280a, 280b. Upon release, the stored energy in the first biasing members 284a, 284b causes the shafts 280a, 280b to translate toward the base 112. If an object 20 is positioned between the clamp 260 and the second surface 216b, the clamp 260 will instead stop in the clamped position, exerting a spring-driven clamping force against the object 20. In addition, the pads 248 and/or the material the base 112 (e.g., the overmolding on the base) may increase friction between the base 112 and the object 20. In some embodiments, a coating may be applied to the clamp 260, particularly the arms 276a, 276b, 276c, 276d, to increase friction between the clamp 260 and the object 20.

When the object 20 is removed from between the clamp 260 and the second surface 216b of the base 112, the clamp 260 is no longer obstructed from returning to the stored position. The first biasing members 284a, 284b continue to urge the clamp 260 toward the base 112. As a result, the clamp 260 automatically transitions from the clamped position to the stored position under the influence of the spring force, returning to a flush or substantially flush position within the recess 272 in the base. This movement does not require user input.

As the shafts 280a, 280b return to the stored position, the plungers 288a, 288b translate within the chambers 228, compressing the air inside the chambers 228. This trapped column of air creates a damping force that slows the closing speed of the clamp 260. Air enters and exits the chambers 228 through a gap 312 defined between the clamshell components 226. The size and geometry of the gap 312 restricts airflow and thereby controls the speed at which the plungers 288a, 288b move, providing a smooth and controlled return of the clamp 260. In some embodiments, the clamshell components 226 form a tighter seal. In such cases, at least one vent, which may be one or more apertures, may be provided to facilitate airflow into and out of the chambers 228. In an illustrative example, the at least one vent may be disposed anywhere on the base 112 that is in airflow communication with the chambers 228.

The fan assembly 100 provides significant advantages in versatility and stability. The configuration of the yoke assembly 108, which enables both pivoting about the first and second axes 180, 212, and rotation about the longitudinal axis 192, allows for directional and customizable airflow. This range of motion provides users with enhanced control over the orientation of the housing 104, ensuring optimal performance in a variety of positions and mounting scenarios.

The combination of the clamp assembly 256 and the magnetic plate 244allows for secure attachment to a wide range of surfaces, whether flat, curved, or irregular, with enhanced holding power on magnetic materials. This adaptability ensures the fan assembly 100 can be easily repositioned in various environments, offering both stationary and dynamic deployment options.

Various disclosures are set forth in the following claims.

## Claims

1. A portable device comprising:
a base configured to support the portable device on a support surface;
a housing supported by the base;
an output element supported by the housing; and
a clamp assembly coupled to the base and including
a clamp movable relative to the base and configured to clamp an object against the base, and
a damping mechanism coupled to the clamp to control a movement speed of the clamp relative to the base.

2. The portable device of claim 1, wherein the clamp is movable between a first position, where the clamp is stored at least partially within the base, and a second position, where the clamp is extended away from the base, and wherein the damping mechanism is configured to control the movement speed of the clamp toward the first position.

3. The portable device of either claim 1 or claim 2, wherein the damping mechanism includes a plunger received within a chamber defined by the base, and wherein the plunger is configured to compress air within the chamber to control the movement speed of the clamp, wherein preferably the damping mechanism also includes
a shaft coupled to the clamp and the plunger, and
a biasing member configured to bias the shaft into the chamber, AND/OR
wherein the base includes a gap or a vent configured to restrict airflow out of the chamber to provide a damping effect.

4. The portable device of any one of claims 1 to 3, wherein the base includes a battery receptacle configured to receive a battery pack, and a magnet configured to magnetically attach to the support surface, wherein the base preferably includes a concave recess, and wherein the magnet is positioned adjacent the concave recess, and wherein further preferably the clamp surrounds the magnet and a periphery of the concave recess.

5. The portable device of any one of claims 1 to 4, wherein the housing includes a shroud that at least partially defines an airflow chamber, wherein the output element includes a fan blade positioned within the shroud, and wherein the portable device further comprises a motor operable to drive rotation of the fan blade.

6. A portable device comprising:
a base configured to support the portable device on a support surface;
a housing supported by the base;
an output element supported by the housing;
a clamp coupled to the base, the clamp movable relative to the base between a first position, where the clamp is stored at least partially within the base, and a second position, where the clamp is extended away from the base; and
an actuator coupled to the clamp, the actuator operable to releasably hold the clamp in the second position.

7. The portable device of claim 6, wherein the clamp is also movable to a third position, where the clamp clamps an object between the base and the clamp.

8. The portable device of either claim 6 or claim 7, wherein the actuator is configured to release the clamp from the second position in response to a user input, preferably wherein upon release by the actuator, the clamp is urged toward the first position by a biasing member.

9. The portable device of any one of claims 6 to 8, wherein the clamp includes a notch, and wherein the actuator is configured to engage the notch when the clamp is in the second position, AND/OR wherein the clamp is biased toward the first position.

10. The portable device of any one of claims 6 to 9, wherein the base includes a recess, and wherein when the clamp is in the first position, the clamp is stored within the recess.

11. The portable device of any one of claims 6 to 10, wherein the actuator includes a body, an arm coupled to the clamp, and a biasing member configured to bias the arm against the clamp.

12. The portable device of any one of claims 6 to 11, wherein the housing includes a shroud that at least partially defines an airflow chamber, wherein the output element includes a fan blade positioned within the shroud, and wherein the portable device further comprises a motor operable to drive rotation of the fan blade.

13. A portable device comprising:
a base configured to support the portable device on a support surface;
a housing supported by the base;
an output element supported by the housing; and
a yoke assembly positioned between the housing and the base and defining a longitudinal axis, the yoke assembly including a first portion coupled to the housing and a second portion coupled to the base, the first portion being rotatable relative to the second portion about the longitudinal axis and defining a first axis about which the housing is pivotable relative to the yoke assembly, the second portion defining a second axis about which the yoke assembly is pivotable relative to the base.

14. The portable device of claim 13, wherein the yoke assembly also includes a floating stop configured to permit at least 360 degrees of rotation of the first portion relative to the second portion, AND/OR wherein the base includes a battery receptacle configured to receive a removable battery pack.

15. The portable device of either claim 13 or claim 14, wherein the first axis is oriented substantially parallel to the second axis, and wherein the longitudinal axis is oriented substantially perpendicular to the first axis and the second axis, AND/OR wherein the housing includes a shroud that at least partially defines an airflow chamber, wherein the output element includes a fan blade positioned within the shroud, and wherein the portable device further comprises a motor operable to drive rotation of the fan blade.
